Europäisches Patentamt

European Patent Office

Office européen des brevets

(19)

(11) Numéro de publication : **0 145 590
B1**

(12) **FASCICULE DE BREVET EUROPÉEN**

(45) Date de publication du fascicule du brevet :
23.03.88

(51) Int. Cl.⁴ : **C 12 C   7/04**

(21) Numéro de dépôt : **84402475.2**

(22) Date de dépôt : **03.12.84**

(54) Perfectionnements apportés aux procédés de production de bière.

(30) Priorité : **06.12.83 FR 8319453**

(43) Date de publication de la demande :
**19.06.85 Bulletin 85/25**

(45) Mention de la délivrance du brevet :
**23.03.88 Bulletin 88/12**

(84) Etats contractants désignés :
**AT BE CH DE FR GB IT LI LU NL SE**

(56) Documents cités :
DE-A- 2 451 046
CHEMICAL ABSTRACTS, vol. 92, no. 23, 9 juin 1980,
page 512, no. 196308y, Columbus, Ohio, US; V.A.
MARINCHENKO et al.: "Effect of fungal cellulase
preparations on the enzymic activity of malt"
CHEMICAL ABSTRACTS, vol. 93, no. 11, 15 septembre
1980, page 558, no. 112267u, Columbus, Ohio, US; S.
HOME: "Stimulation of malting with microbial enzymes"
CHEMICAL ABSTRACTS, vol. 94, no. 17, 27 avril 1981,
page 600, no. 137755k, Columbus, Ohio, US; V.A.
MARINCHENKO et al.: "Fermentation of wort from a
starch-containing raw material prepared using cellulases"
Le dossier contient des informations techniques
présentées postérieurement au dépôt de la demande
et ne figurant pas dans le présent fascicule.

(73) Titulaire : **BERTIN & CIE
Zone Industrielle Boîte postale 3
F-78373 Plaisir Cedex (FR)**

(72) Inventeur : **Gascoin-Hache, Danielle
3 Allée de l'Epée
F-78180 Voisins le Bretonneux (FR)**
Inventeur : **Hache, Jean Georges Edouard Joseph
3 Allée de l'Epée
F-78180 Voisins le Bretonneux (FR)**

(74) Mandataire : **Orès, Bernard et al
Cabinet ORES 6, Avenue de Messine
F-75008 Paris (FR)**

**0 145 590**

## Description

La présente invention est relative à des perfectionnements apportés aux procédés de production de bière.

Comme on le sait, c'est au cours des opérations de brassage (qu'elles aient lieu par infusion, par décoction ou par des méthodes mixtes) que les enzymes qui se sont développées dans le malt solubilisent une certaine quantité des matières premières. C'est au cours de ces opérations que les amylases transforment l'amidon en oses en oligoholosides fermentescibles. C'est au cours de ces opérations également que les protéines sont dégradées par les protéases en polypeptides, peptides et acides aminés.

Ces processus enzymatiques conduisent à la maïsche qui est séparée par exemple par filtration en moût et en drèches.

Ces dernières quoique servant à l'alimentation du bétail sont mal valorisées et représentent en poids près du quart du malt introduit pour la préparation des moûts.

C'est la raison pour laquelle il a été proposé dans l'Art antérieur de réaliser une transformation plus complète du malt en moût par l'addition d'enzymes au cours des opérations de brassages.

On a ainsi proposé :
— l'addition de protéases pour provoquer une dégradation plus poussée des protéines contenues dans le malt ;
— l'addition de l'alpha-amylase pour liquéfier plus rapidement et plus complètement l'amidon du malt ;
— l'addition de la béta-glucanase pour dégrader les polyholosides dans la paroi cellulaire de l'albumen du malt ;
— l'addition de la glucoamylase, laquelle en hydrolysant les liaisons $\alpha$-1,4-glucane des polysaccharides, conduit à une augmentation générale du taux final de fermentation du moût.

Toutes ces additions d'enzymes ont pour but de diminuer le poids des drèches et d'utiliser aussi complètement que possible les matières premières mise en jeu. Encore faut-il que cette diminution du poids des drèches ne soit pas obtenues aux dépens de la stabilité de la bière, ni aux dépens du caractère et de la qualité de la bière obtenue. Ce qui n'était (et de loin) pas le cas pour toutes ces tentatives.

Il est à noter qu'aucune des tentatives décrites ci-dessus ne préconise l'addition des enzymes préalablement à l'opération de brassage du malt.

Il a également été proposé d'introduire une cellulase d'origine fongique, provenant de Trichoderma reesei, dans la cuve de brassage du malt et de procéder au brassage du malt par chauffage par paliers successivement à 53 °C, puis à 63-67 °C et enfin à 76 °C, l'addition d'une telle cellulase ayant pour effet de dégrader les $\beta$-glucanes et les pentosanes présents dans le malt et dans les éventuelles adjonctions de houblon et de farine de froment au malt, ainsi que dans les parois cellulaires du malt ; un tel traitement a pour résultat d'améliorer considérablement la filtrabilité des moûts obtenus, de réduire leur viscosité et d'augmenter leur rendement [cf. Proc. Inst. of Brew. Aust. + New Zeal. Section, 1980, pages 127-134], pour une addition de cellulase comprise entre 0,03 et 0,05 % du poids du malt ou de la charge de malt + houblon ou farine de froment. L'Article cité plus haut mentionne également que les quatre fractions enzymatiques cellulolytiques séparées par chromatographie par échange d'ions, de cellulase provenant de Trichoderma reesei, à savoir deux fractions $C_1I$ et $C_1II$ d'exo-glucanases et deux fractions $C_xI$ et $C_xII$ d'endo-glucanases, et la fraction $\beta$-glucosidase $\beta II$, améliorent également, mais dans une proportion moindre, la filtrabilité de moûts résultant du brassage de versements de mélanges de malt et de farine de froment ou de malt et de houblon lorsqu'elles sont ajoutées aux versements à des doses aussi faibles que 0,002 à 0,12 % en poids, respectivement, pour la fraction $C_1I$ et que 0,000 9 à 0,012 % en poids, respectivement, pour la fraction $C_xI$, par exemple.

Le traitement décrit ci-dessus prévoit bien l'addition de la cellulase avant l'opération de brassage du malt ; toutefois, le brassage du malt intervient immédiatement après cette addition, dans les conditions bien connues dans l'Art antérieur, par paliers de températures successifs à 52 °C, 63 °C, 76 °C, et si l'addition de cellulase a une incidence sur la filtrabilité et le rendement, il ne semble pas qu'elle ait pour effet de réduire le poids des drèches.

Il a aussi été proposé (CHEMICAL ABSTRACT, Vol. 92, N° 23, 9 juin 1980, page 512) d'utiliser des cellulases d'origine fongique obtenues à partir de Geotrichum Candidum pour augmenter l'activité enzymatique du malt. Cette cellulase étant ajoutée au malt avant le brassage par incubation à une température de 40 °C et à un pH de 6 à 6,5.

La présente invention s'est en conséquence donné pour but de pourvoir à un procédé de production de bière qui répond mieux aux nécessités de la pratique que les procédés visant au même but antérieurement connus, notamment en ce qu'il permet une augmentation considérable du rendement de brassage et une réduction très appréciable du point des drèches, sans avoir d'effets indésirables sur les caractéristiques de la bière telles que sa stabilité, son caractère, sa qualité ou ses propriétés organoleptiques.

La présente invention a pour objet un procédé de production de bière qui consiste à traiter le malt au cours d'une phase préalable d'empâtage par une cellulase propre à transformer la cellulose cristalline

2

présente dans le malt, en cellulose amorphe, sans modifier la nature des sucres présents dans le produit fini, à savoir la bière obtenue, et en ce que l'on soumet ensuite le malt ainsi traité à des phases de brassage, de fermentation et de filtration, caractérisé en ce que la cellulase mise en œuvre est une cellulase présentant une activité enzymatique $C_1$ prépondérante et une faible activité β-glucosidase, d'origine fongique, et notamment obtenue à partir de Trichoderma viride ou de Trichoderma reesei.

La Demanderesse a découvert, en effet, que la cellulose cristalline présente dans le malt bloque les enzymes propres du malt développées au cours des opérations de maltage de l'orge ; il lui est donc apparu que pour améliorer l'activité enzymatique propre au malt au cours du brassage, il faut éliminer la cellulose cristalline en la transformant en cellulose amorphe, qui n'exerce pas d'effet de blocage sur les enzymes propres du malt.

Il est connu, comme on l'a indiqué plus haut, que la cellulase est un complexe enzymatique à plusieurs composantes dont les trois plus importantes sont :
— la composante $C_1$, dont la structure est encore mal identifiée, mais qui comprend une exo-cellobiohydrolase et dont la principale propriété est de transformer la cellulose cristalline en cellulose amorphe,
— la composante $C_x$ constituée par des endo-gluconases et dont la propriété est de transformer la cellulose amorphe en produits solubles tels que la cellobiose et le glucose,
— la cellobiase, ou β-glucosidase, qui hydrolyse la cellobiose et les petites chaînes cello-oligosaccharides en glucose, mais n'a aucune action sur la cellulose.

La Demanderesse a donc fondé la présente invention sur le fait que seule une cellulase présentant une activité enzymatique $C_1$ prépondérante serait apte à atteindre le but qu'elle s'était fixé. En outre, la cellulase à activité enzymatique $C_1$ prépondérante utilisable dans le cadre de la présente invention doit présenter une proportion de composante cellobiase aussi faible que possible, car dans le cas d'une cellulase présentant une forte proportion de cellobiase, le malt comprendrait une quantité importante de sucres réducteurs provenant de la cellulose et non des sucres réducteurs provenant de l'action des amylases développées lors des opérations de maltage, c'est-à-dire que le produit obtenu, comprenant des sucres différents de ceux que doit contenir la bière, serait un produit autre que de la bière. La Demanderesse a pu établir qu'une cellulase fongique obtenue à partir de Trichoderma viride ou de Trichoderma reesei répond aux conditions requises conformément à la présente invention.

Selon un autre mode de réalisation préféré du procédé objet de la présente invention, le traitement enzymatique du malt par la cellulase, au cours de la phase d'empâtage, est effectué à une température comprise entre 45 et 50 °C.

Selon encore un autre mode de réalisation avantageux du procédé objet de la présente invention, la quantité de cellulase mise en œuvre est comprise entre 0,05 et 2 % par rapport au poids du malt.

Selon un autre mode de réalisation avantageux du procédé objet de la présente invention, le traitement enzymatique du malt par la cellulase au cours de la phase d'empâtage et l'opération de brassage subséquente, sont réalisés à un pH compris entre 4,5 et 6,5.

Outre les dispositions qui précèdent, l'invention comprend encore d'autres dispositions, qui ressortiront de la description qui va suivre.

La présente invention vise plus particulièrement le nouveau procédé de production de bière conforme aux dispositons qui précèdent, ainsi que les moyens pour sa mise en œuvre et les procédés d'ensemble dans lesquels est inclus ledit procédé.

L'invention sera mieux comprise à l'aide du complément de description qui va suivre, qui se réfère à des exemples de mise en œuvre du procédé conforme à la présente invention.

Il doit être bien entendu, toutefois, que ces exemples de mise en œuvre sont donnés uniquement à titre d'illustration de l'objet de l'invention, dont ils ne constituent en aucune manière une limitation.

Exemple 1

On mélange 1 kg de malt broyé avec 4 kg d'eau. Le pH est ajusté entre 4,5 et 6,5 et on agite en chauffant progressivement jusqu'à 40 °C.

On ajoute alors 200 mg de cellulase préparée à partir de Trichoderma viride QM 9414, puis on porte la température du mélange à 45-50 °C, et on maintient cette température pendant une heure.

On poursuit alors le chauffage de manière à ce que la montée de la température se fasse à une vitesse de 1 °C par minute. Quand la température atteint 52 °C, on maintient ce palier pendant 15 minutes. On opère de la même façon à 63 °C (palier de 15 minutes) et à 75 °C (palier de 10 minutes). Ce dernier palier (10 minutes à 75 °C) a surtout pour objet d'inhiber les enzymes et notamment l'alpha-amylase, avant la filtration de la maïsche.

Caractéristiques du produit obtenu

Le Tableau I ci-après présente les résultats d'un brassage de référence et d'un brassage conforme à la présente invention.

**0 145 590**

Tableau I

| Analyses sur le moût | Référence | Avec traitement enzymatique |
|---|---|---|
| • Densité PLATO (°) | 13,09 | 15,37 |
| • Protéines totales (g/100 ml) | 144 | 162 |
| • Trouble (unités EBC) | 180 | 130 |
| • Maltotriose (g/100 ml) | 1,99 | 1,67 |
| • Maltose (g/100 ml) | 6,65 | 7,80 |
| • Glucose (g/100 ml) | 1,22 | 2,95 |
| • Fructose (g/100 ml) | 0,09 | 0,37 |

Par ailleurs, la quantité de drèches est réduite de 32 %.

222 g : pour le brassage de référence,

151 g : pour le brassage conforme à la présente invention.

Il résulte des caractéristiques présentées dans le Tableau I que le traitement enzymatique préalable conforme à la présente invention aboutit à des résultats extrêmement intéressants et notamment :

— le moût obtenu est plus concentré en sucres fermentescibles ;

— la quantité des résidus solides est nettement réduite ;

— la concentration en sucres du moût permet de passer à un brassage haute densité, sans être obligé de passer par une évaporation en chaudière ;

— le trouble, exprimé en unités EBC, est réduit.

Les analyses effectuées sur le moût ont de plus démontré que le profil en acides aminés du moût n'est pas perturbé par l'addition de la cellulase.

## Exemple 2

On ajoute à 1307 g de mouture humide de malt, 2,5 g de cellulase obtenue à partir de Trichoderma viride QM 9414. La température de la masse est portée progressivement (1 °C/minute) à 48 °C et on maintient à cette température pendant 60 minutes au cours desquelles on laisse agir l'enzyme sur le versement.

On procède alors à l'opération de brassage proprement dite comme décrit à l'Exemple 1, par chauffage par paliers à 52 °C, puis à 63 °C, puis à 75 °C.

Parallèlement, on effectue un essai témoin dans lequel on soumet 1575 g d'un versement de la même mouture humide de malt à une première phase de chauffage à 48 °C pendant une heure, pendant la phase d'empâtage, après quoi on procède à l'opération de brassage dans les mêmes conditions que celles décrites dans l'Exemple 1.

L'essai avec la cellulase et l'essai témoin ont utilisé, pour la phase de fermentation, le même levure.

Le Tableau II ci-après rassemble les résultats des principales phases du cycle de brassage.

Tableau II

Résultats composés des essais avec cellulase et sans cellulase

| ANALYSES | TEMOIN | ESSAI |
|---|---|---|
| BRASSAGE | | |
| Densité Plato (°) | 12,03 | 12,03 |
| Alcool (% en poids) | 3,8 | 3,78 |
| Maltotriose (g/100 ml) | 0,11 | 0,16 |

4

# 0 145 590

Tableau II (Suite)

| ANALYSES | TEMOIN | ESSAI |
|---|---|---|
| Maltose (g/100 ml) | 0,28 | 0,22 |
| Matières amères g. extrait | 2,9 | 2,5 |
| Versement malt g. | 1575 | 1307 |
| Durée filtration h. | 3 | 3 |
| Rendement brassage % | 75,4 | 78,9 |
| Poids humide drèches g | 1370 | 999 |
| Réduction poids drèches humides % | - | 26,6 |
| Hauteur drèches cm | 17,5 | 13,5 |
| Addition acide $H_3PO_4$ 1N ml | 1,9 | 1,4 |
| pH fin filtration | 5,81 | 5,70 |
| Evaporation horaire % | 5,94 | 6,93 |
| FERMENTATION | | |
| Densité limite °P | 2,69 | 2,46 |
| Atténuation limite °P | 76,8 | 79,09 |
| Densité finale fin fermentation °P | 3,36 | 3,11 |
| Densité finale fin garde °P | 2,95 | 3,03 |
| Atténuation fin fermentation % | 92,49 | 92,90 |
| Atténuation fin garde % | 97,08 | 93,77 |
| Taux de multiplication des levures | 2,1 | 2,3 |
| Indice de démarrage | 5,8 | 5,6 |
| Unités de temps d'atténuation | 73,0 | 73,0 |
| FILTRATION | | |
| Débit de filtration $l/h/m^2$ | 78 | 92 |

On constate que pour un versement inférieur de 17 % en malt par rapport au témoin, le rendement de brassage est de plus de 3 % supérieur.

La quantité de drèches récoltées est réduite de 26,6 % par rapport au témoin (drèches humides).

Les autres résultats de brassage ne présentent pas de différences importantes, à l'exception du taux de multiplication des levures qui est un peu plus élevé par rapport au témoin et qui dénote un léger changement dans la cinétique de fermentation dans le sens d'une amélioration de cette dernière.

En particulier, la concentration en polyphénols ne présente pas de différence significative par rapport au témoin, dans la bière obtenue en mettant en œuvre le procédé conforme à la présente invention, ce qui signifie que son goût n'est pas modifié.

Par ailleurs, la bière obtenue par le procédé conforme à la présente invention, ne présente pas, à la filtration, un comportement différent de celui de la bière obtenue par le témoin, ce qui est parfaitement cohérent puisque la présente invention ne cherche pas à améliorer la filtrabilité de la maïsche, comme les procédés connus dans l'Art antérieur qui ajoutent la cellulase au cours de la phase de brassage.

Le Tableau III ci-après rassemble les principales mesures physico-chimiques de la bière obtenue par le procédé témoin et de la bière obtenue par le procédé conforme à la présente invention.

Le Tableau III fait apparaître que les bières issues de brassins traités par la cellulase conformément à la présente invention, ne diffèrent pas de façon significative des bières obtenues par le procédé témoin.

Tableau III

| | Témoin | Essai |
|---|---|---|
| Extrait apparent (Plato) | 2,94 | 3,00 |
| Extrait réel (Plato) | 4,66 | 4,71 |
| Extrait primitif (Plato) | 12,03 | 12,03 |
| Alcool en poids % | 3,80 | 3,78 |
| Alcool en volume % | 4,70 | 4,67 |
| Mousse Kromousse | 18,30 | 17,1 |
| Amertume EBC | 20,7 | 22,6 |
| Couleur EBC | 6,5 | 7,7 |
| Brillance 0°C | 3,5 | 2,7 |
| Brillance 20°C | 1,0 | 0,5 |
| Test 7/1 | > 12 | > 12 |
| O$_2$ dissous ppm | 0,01 | - |
| Fructose Glucose Saccharose g/100 ml | --- | --- |
| Maltose g/100 ml | 0,28 | 0,22 |
| Maltotriose g/100 ml | 0,11 | 0,16 |
| B 3 ppm | 2,19 | 2,27 |
| Catéchine ppm | 2,98 | 3,44 |
| Epicatéchine ppm | 0,18 | 0,30 |

Ainsi que cela ressort de ce qui précède, l'invention ne se limite nullement à ceux de ses modes de mise en œuvre, de réalisation et d'application qui vienne d'être décrits de façon plus explicite ; elle en embrasse au contraire toutes les variantes qui peuvent venir à l'esprit du technicien en la matière, sans s'écarter du cadre, ni de la portée, de la présente invention.

**Revendications**

1. Procédé de production de bière qui consiste à traiter le malt au cours d'une phase préalable d'empâtage, par une cellulase propre à transformer la cellulose cristalline présente dans le malt, en cellulose amorphe, sans modifier la nature des sucres présents dans le produit fini, à savoir la bière obtenue, et en ce que l'on soumet ensuite le malt ainsi traité à des phases de brassage, de fermentation et de filtration, caractérisé en ce que la cellulase mise en œuvre est une cellulase présentant une activité enzymatique $C_1$ prépondérante et une faible activité β-glucosidase, d'origine fongique, et notamment obtenue à partir de Trichoderma viride ou de Trichoderma reesei.

2. Procédé selon la revendication 1, caractérisé en ce que le traitement enzymatique du malt par la cellulase, au cours de la phase d'empâtage, est effectué à une température comprise entre 45 et 50 °C.

3. Procédé selon l'une quelconque des revendications 1 à 2, caractérisé en ce que la quantité de celulase mise en œuvre est comprise entre 0,05 et 2 % par rapport au poids du malt.

4. Procédé selon l'une quelconque des revendications 1 à 3, caractérisé en ce que le traitement enzymatique du malt par la cellulase au cours de la phase d'empâtage et l'opération de brassage subséquente, sont réalisés à un pH compris entre 4,5 et 6,5.

**Claims**

1. Process for beer production which consists of treating the malt in the course of a prior mashing phase, with a celulase adapted to convert the crystalline cellulose present in the malt, into amorphous cellulose, without modifying the nature of the sugars present in the finished product, namely the beer obtained, and then subjecting the thus-treated malt to brewing, fermentation and filtration phases, wherein the celulase employed is a celulase having a preponderant $C_1$ enzymatic activity and a weak β-glucosidase activity of fungal origin and particularly obtained from Trichoderma viride or from Trichoderma reesei.

2. Process according to claim 1, wherein the enzymatic treatment of the malt with the cellulase, in the course of the mashing phase, is carried out at a temperature comprised between 45 and 50 °C.

3. Process according to any one of claims 1 and 2, wherein the amount of cellulase employed is comprised between 0.5 and 2 % with respect to the weight of the malt.

4. Process according to any one of claims 1 to 3, wherein the enzymatic treatment of the malt by the cellulase in the course of the mashing phase and the subsequent brewing operation, are effected at a pH comprised between 4.5 and 6.5.

**Patentansprüche**

1. Verfahren zur Herstellung von Bier, bei dem in einer vorgeschalteten Phase das Malz unter Verwendung von Zellulase, die fähig ist, die in dem Malz vorhandene kristalline Zellulose in amorphe Zellulose ohne Änderung des im Endprodukt vorhandenen Zuckers umzuwandeln, eine Einmaischung erfolgt und anschließend das solchermaßen behandelte Malz einem Maischprozeß, unter Umrühren, einer Fermentation und Filtration unterworfen wird, dadurch gekennzeichnet, daß man eine Zellulase verwendet, in der die ezymatische Aktivität $C_1$ vorherrschend ist und die auch eine schwache β-Glukosidase-Aktivität aufweist, wobei die Zellulase aus Pilzen stammt und insbesondere aus Trichoderma viride oder aus Trichoderma reesei erhalten ist.

2. Verfahren nach Anspruch 1, dadurch gekennzeichnet, daß die enzymatische Behandlung des Malzes durch die Zellulase im Verlauf der vorgeschalteten Phase der Einmaischung, bei einer Temperatur zwischen 45 und 50 °C erfolgt.

3. Verfahren nach Anspruch 1 oder 2, dadurch gekennzeichnet, daß die Menge der eingesetzten Zellulase zwischen 0,05 und 2 % bezogen auf das Malz-Gewicht beträgt.

4. Verfahren nach Anspruch 1 bis 3, dadurch gekennzeichnet, daß die enzymatische Behandlung des Malzes durch die Zellulase im Verlauf der vorgeschalteten Phase der Einmaischung (Verschleimung, Klebrigmachung) und die sich anschließende Verfahrensstufe des Maischens (Durchwirbelns, Umrührens) bei einem pH-Wert zwischen 4,5 und 6,5 stattfindet.